# EUROPÄISCHE PATENTSCHRIFT

(11) **EP 2 204 315 B1**
(45) Veröffentlichungstag und Bekanntmachung des Hinweises auf die Patenterteilung: **03.08.2011**
(21) Anmeldenummer: 09014868.5
(22) Anmeldetag: 01.12.2009
(51) Int. Cl.: B62K 3/00

(54) **Tretroller**
Pedal scooter
Trottinette

(30) Priorität: 30.12.2008 DE 102008063258
(43) Veröffentlichungstag der Anmeldung: 07.07.2010
(73) Patentinhaber: Abel, Helmut, 78600 Maisons-Laffitte (FR)
(72) Erfinder: Abel, Helmut, 78600 Maison-Laffitte (FR); Abel, Diane, 78600 Maison-Laffitte (FR); Abel, Céline, 78600 Maison-Laffitte (FR)
(74) Vertreter: Patentanwälte Westphal, Mussgnug & Partner

(56) Entgegenhaltungen:
- EP-A1- 1 348 617
- EP-A1- 1 950 126
- DE-A1- 4 410 304
- DE-A1- 10 056 891
- DE-U1- 20 019 844
- DE-U1- 20 214 457
- DE-U1-202007 015 244

## Beschreibung

Unter einem Tretroller versteht man ein muskelkraftbetriebenes, in der Regel zweirädriges Kleinfahrzeug mit einem bodennahen Trittbrett, auf dem sich eine Person stehend fortbewegen kann. Hierbei steht die Person mit einem Fuß auf dem Trittbrett, während der Tretroller durch Stoßbewegungen des anderen Fußes, des Stoßfußes, angetrieben wird. Tretroller dieser Art sind in großer Zahl bekannt.

Ferner werden im Handel Tretroller in Form von Kinderdreirädern mit einer Stehplattform angeboten, bei welchen die beiden hinteren Laufräder auf einer gemeinsamen starren Achse gelagert sind.

Die Stehplattform, also das Trittbrett, ist meist oberhalb dieser Achse oder oberhalb und direkt hinter dieser Achse angebracht. Nachteil dieser Fahrzeuge ist, dass der Stoßfuß bei auf der Plattform platziertem Standfuß die Fahrbahn nicht ungestört und nicht sehr wirkungsvoll erreichen kann, da die durchgehende Radachse und die Plattform sowie die häufig nach oben hervorstehenden Laufräder stören, so dass nur kleine, kurzhubige Stoßbewegungen des Stoßfußes mit geringem Effekt möglich sind.

Aus US 6,554,302 B1 ist ein Dreirad bekannt, welches entweder durch Schaukelbewegungen des Körpers nach vorn getrieben wird und wobei dann beide Füße des Benutzers auf kleinen Trittbrettern bleiben, oder bei welchem der Stoßfuß langhubige Fußbewegungen in einem für den Stoßfuß vorgesehenen Freiraum zwischen einem etwa U-förmigen Rahmen und den beiden hinteren Laufrädern ausführen kann.

Auch bei diesem Fahrzeug ist eine etwa senkrecht stehende Lenkstange vorgesehen, die in einer am vorderen Ende des Fahrzeugs angebrachten Lagerbuchse gelagert ist und an welcher mittels einer Gabel das vordere Lenkrad gelagert ist. Der Rahmen dieses Fahrzeuges weist zwei sich in Fahrtrichtung und parallel zueinander erstreckende Arme auf, an deren hinteren Enden nicht lenkbare Laufräder gelagert sind. Jeder dieser Arme trägt im vorderen und äußeren Bereich je ein schmales Trittbrett, das der Aufnahme des Standfußes dient. Der Freiraum zwischen den beiden außen liegenden auf den Armen angebrachten Trittbrettern ermöglicht die Abstoßbewegungen des Stoßfußes.

Dieses auch als Industrieroller auf den Markt gebrachte Fahrzeug hat jedoch folgende Nachteile.

Beim Abstoßen mit dem Stoßfuß befindet sich der Standfuß auf einem der beiden außermittigen Trittbretter, was dazu führt, dass das Körpergewicht des Fahrers bei jedem Abstoßvorgang im Wesentlichen auf den äußeren Bereich wirkt, was bei dem naturgemäß unruhigen Abstoßvorgang eine instabile Lage mit Kippgefahr zur Folge hat.

Die Gefahr vergrößert sich, wenn das kaum belastete andere Hinterrad über ein erhabenes Hindernis, z. B. eine Bodenerhebung, fährt, was dazu führen kann, dass das Fahrzeug seitlich umstürzt.

Ein weiterer Nachteil ist, dass der Fahrer bei jedem Abstoßvorgang nicht mittig vor der Lenkstange mit dem Lenkrad, sondern seitlich zu dieser steht, so dass er die Lenkstange mit den an dieser angebrachten Bremshebeln entweder mit seitlich versetzten Händen halten oder sich zur Lenkstangenmitte neigen und hierbei auf der Lenkstange abstützen muss. Schwierig ist es hierbei, die Lenkstange zielgenau zu führen, wobei der Fahrer eine recht unkomfortable und ermüdende Position einnehmen muss. Hat der Fahrer mit diesem Fahrzeug nach mehreren Abstoßvorgängen eine gewisse Fahrgeschwindigkeit erreicht, wird er den Stoßfuß auf das gegenüberliegende schmale Trittbrett aufsetzen, um eine komfortablere und weniger ermüdende Position einnehmen zu können. Zu diesem Zweck muss er den Stoßfuß weit nach außen bewegen und diesen zielgenau auf das schmale Trittbrett aufsetzen. Abgesehen davon, dass dieser Vorgang eine nicht unbeträchtliche Körperbeherrschung erfordert, führt er außerdem zu einer unschönen breitbeinigen und wenig bequemen und unsicheren Haltung.

Der vorliegenden Erfindung liegt die Aufgabe zugrunde, ein derartiges Fahrzeug mit den im Oberbegriff des Anspruchs 1 genannten Merkmalen zur Vermeidung der beschriebenen Nachteile zu verbessern. Nach dem Vorschlag gemäß Anspruch 1 wird diese Aufgabe dadurch gelöst, dass das Trittbrett, das der Aufnahme des Standfußes des Fahrers dient, zwischen den beiden Armen des Rahmens mittig angeordnet ist und dass der Abstand jeweils zwischen einem Arm und dem seitlichen Rand des Trittbretts mindestens der Breite des Stoßfußes des Fahrers entspricht.

Bei einem derartigen Tretroller bewegt sich der Stoßfuß entweder links oder rechts von dem auf dem Trittbrett ruhendenden Standfuß im Freiraum zwischen Trittbrett und Rahmenarm.

Ein derartiger Tretroller bleibt in allen Fahrphasen, also sowohl bei Beschleunigung, beim freien Lauf sowie beim Absteigen des Fahrers, völlig kippstabil, da der Fahrer stets mittig auf dem Trittbrett zentral vor der Lenkstange in normaler, komfortabler und sicherer Aufrechthaltung steht. Er kann den Tretroller bequem und stressfrei vorwärts treiben und zielgenau lenken, ohne akrobatische Bewegungen ausführen und in Körperschräglage gehen zu müssen. So kann er sich ganz auf das Fahren und auf die Umgebung konzentrieren. Der die Schubkraft für die Vorwärtsfahrt erzeugende Stoßfuß kann bei normaler und aufrechter Körperposition völlig unbehindert, problemlos und sehr wirkungsvoll die Fahrbahnoberfläche erreichen. Insbesondere kann der Stoßfuß unbehindert langhubige Abstoßbewegungen durchführen. Das Körpergewicht des Fahrers bleibt in allen Fahrphasen in idealer Weise auf die drei Räder verteilt. Da die beiden hinteren Laufräder in allen Fahrphasen gleichfalls gleich stark belastet sind, besteht keine Kippgefahr.

Auch das in DE 44 10 304 A1 beschriebene Fortbewegungs- und Transportmittel, bei welchem zwischen den beiden Armen eines Rahmens ein durchgehendes Trittbrett vorgesehen ist, beseitigt die beschriebenen Nachteile nicht, da zwischen einem jeweiligen Arm und dem seitlichen Rand des Trittbrettes kein Freiraum vorhanden ist, in welchen der Stoßfuß passen würde.

Schließlich erlaubt die erfindungsgemäße Konstruktion auch eine extrem kurze und damit sehr kompakte Bauweise.

Konstruktive Einzelheiten zur Realisierung des Erfindungsvorschlages sind Gegenstand der Unteransprüche 2 bis 9.

Zur Erhöhung der Stabilität des U-förmigen Rahmens ist mit Anspruch 3 vorgeschlagen, parallel zu dem die beiden Rahmenarme verbindenden Joch eine Stabilisierungsstrebe vorzusehen und das Trittbrett mit seinem vorderen Ende an Joch und Stabilisierungsstrebe anzubringen.

Dies ist vor allem dann von Vorteil, wenn, wie mit Anspruch 4 vorgeschlagen ist, das Trittbrett aus elastisch federndem Material, vorzugsweise Stahl, insbesondere Federstahl, oder einem geeigneten Kunststoff besteht. Mit einem solchen Trittbrett können zur Schonung des Fahrers beim Überfahren von Bodenunebenheiten entstehende Stöße gedämpft werden.

Um den Tretroller den individuellen Anforderungen des Fahrers anpassen zu können, ist gemäß Anspruch 6 vorgeschlagen, das Trittbrett, das gemäß Anspruch 5 sich zweckmäßigerweise nach hinten verjüngt, seitlich verschiebbar und/oder höhenverstellbar zu gestalten. Damit kann der Freiraum zwischen Rahmenarm und Trittbrett je nach Wünschen und Bedürfnissen des Fahrers variiert werden.

In seiner einfachsten Form besitzt der Tretroller nur ein vorderes Lenkrad.

Ist eine größere Stabilität gewünscht, können, wie mit Anspruch 7 vorgeschlagen, an der Lenkstange auch zwei gleichachsige, in geringem Abstand voneinander angeordnete Lenkräder vorgesehen sein.

Im Übrigen sind weitere Merkmale der Erfindung nachstehend anhand bevorzugter Ausführungsbeispiele, die in den Zeichnungen dargestellt sind, im Einzelnen erläutert. In den Zeichnungen zeigen:

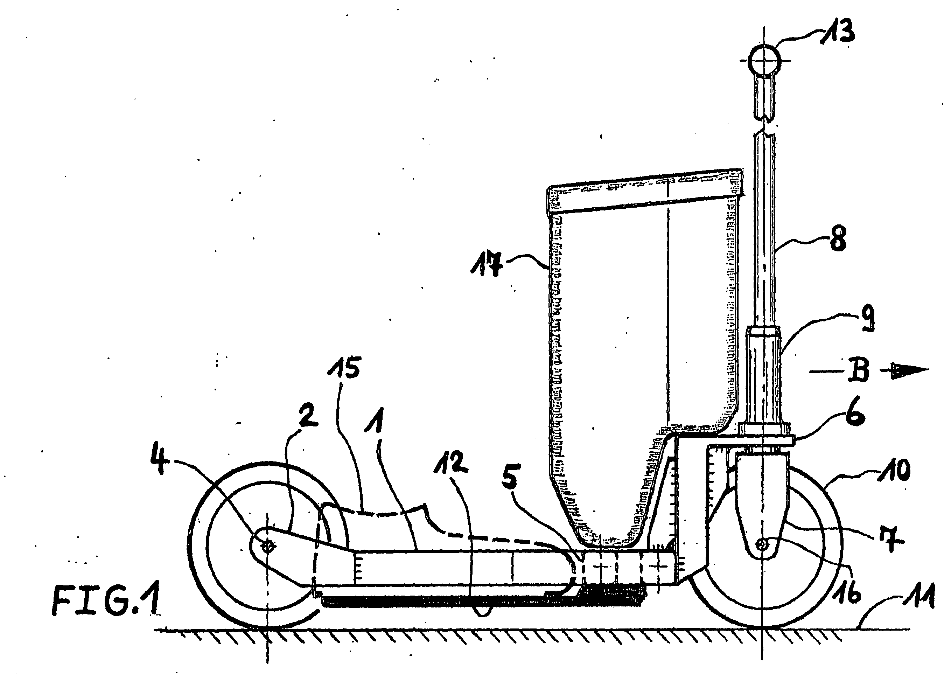

- Figur 1: Seitenansicht eines erfindungsgemäßen Tretrol- lers nach einem ersten Ausführungsbeispiel,

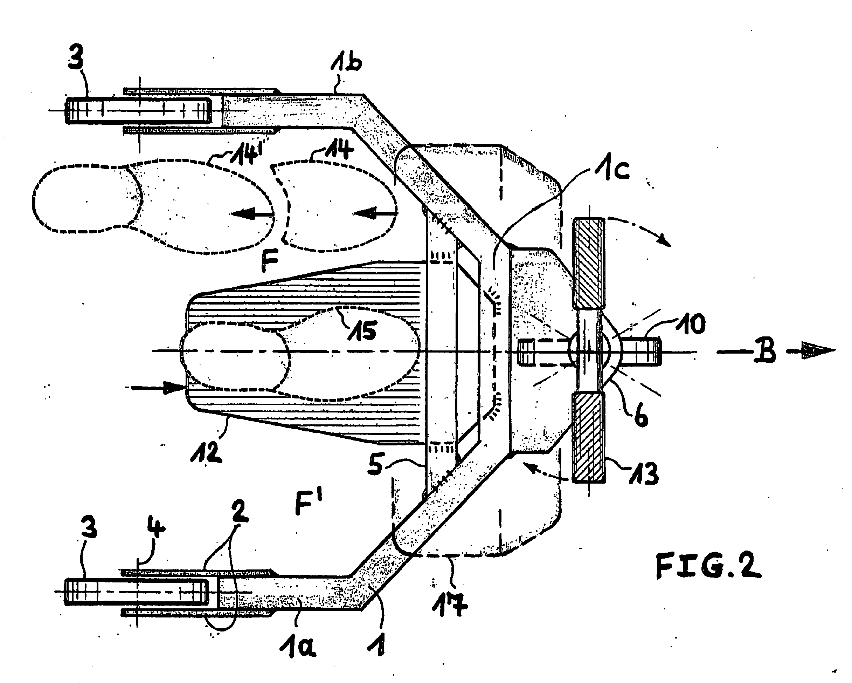

- Figur 2: Aufsicht des Tretrollers gemäß Figur 1,
- Figur 3: Seitenansicht eines erfindungsgemäßen Tretrol- lers nach einem zweiten Ausführungsbeispiel und
- Figur 4: Seitenansicht eines erfindungsgemäßen Tretrol- lers nach einem dritten Ausführungsbeispiel.

In den Zeichnungen ist der erfindungsgemäße Tretroller in Form eines dreirädrigen Fahrzeuges dargestellt.

Der Tretroller besteht im Wesentlichen aus einem Fahrzeugrahmen 1, an welchem an seinem vorderen Ende die Lenkstange 8 mit Lenkrad 10 und an seinem hinteren Ende zwei Laufräder 3 drehbar gelagert sind, wobei das als Plattform dienende bodennahe Trittbrett 12 mittig hinter der Lenkstange 8 zwischen den beiden Armen 1a und 1b des Rahmens 1 angeordnet ist.

Der im Wesentlichen U-förmige Rahmen 1 mit seinen beidseitigen Armen 1a und 1b und mit dem diese verbindenden Joch 1c besteht bei dem dargestellten Ausführungsbeispiel aus verschweißtem Vierkantrohrprofil. Er kann jedoch auch als durchgehender, U-förmiger Bogen aus Rundrohr ausgeführt sein.

An den hinteren Enden der Rahmenarme 1a und 1b sind Radgabeln 2 vorgesehen, welche jeweils ein hinteres Laufrad 3 mit seiner Hinterradachse 4 aufnehmen. Bei einem nicht dargestellten Ausführungsbeispiel ist auf die Radgabel verzichtet, wobei das Laufrad außen am Ende des Rahmenarms auf einer freitragenden Achse gelagert ist.

Der U-förmige Rahmen 1 ist mit einer Stabilisierungsstrebe 5 versteift, die parallel zu dem die Rahmenarme 1a und 1b verbindenden Joch 1c verläuft. Am Joch 1c ist ein in Seitenansicht L-förmiger Träger 6 angebracht, welcher das zylindrische Lager 9 für die Lenkstange 8 trägt.

Der etwa parallel zur Fahrbahn 11 gelegene, nach hinten sich weit öffnende Rahmen 1 mit seinen Armen 1a und 1b trägt in seiner Mitte das Trittbrett 12, welches nur an seinem vorderen Ende mit der Stabilisierungsstrebe 5 und dem Joch 1c fest verbunden ist.

Das sich nach hinten verjüngende Trittbrett 12 verläuft in geringem Abstand etwa parallel zur Fahrbahn 11, vorzugsweise in einem Abstand von 25 mm.

Das Trittbrett 12 und der Rahmen 1 sind so dimensioniert, dass sich beidseitig des Trittbrettes 12 Freiräume F und F' ergeben, die so dimensioniert sind, dass der Stoßfuß 14 in diesen Räumen langhubige Abstoßbewegungen unbehindert ausführen kann, während der Standfuß 15 auf dem Trittbrett 12 ruht.

Zum Gebrauch steigt der Fahrer beispielsweise mit seinem rechten Fuß 15 auf das zentrale, tief liegende Trittbrett 12, wobei er mittig, also nicht seitlich versetzt, vor der Lenkstange 8 steht, worauf er in bequemer Haltung den Lenker 13 erfassen kann. Mit seinem linken Fuß kann er relativ langhubige Abstoßbewegungen im Freiraum F durchführen, wie mit den Umrissen 14 und 14' angedeutet ist. Auch beim Abstoß, also in der Beschleunigungsphase, sowie bei voller Fahrt bleibt der Tretroller völlig kippstabil. Das wird dadurch erreicht, dass die hinteren Laufräder 3 weit auseinander liegen und das Körpergewicht des Fahrers weitgehend gleichmäßig auf das vordere Lenkrad 10 und die beiden hinteren Laufräder 3 verteilt ist.

Außerdem kann der Fahrer im Notfall bequem und schnell vom Trittbrett 12 abspringen.

Bevorzugt der Fahrer die Verwendung eines Fußes, z. B. des linken, zum Abstoßen, kann das Trittbrett 12 am Rahmen 1 quer verschiebbar angeordnet sein, um so z. B. den Freiraum F zu Lasten des Freiraumes F' zu vergrößern.

Bei einer weiteren, nicht dargestellten Variante weist der Tretroller anstelle eines zwei vordere Lenkräder auf, so dass ein noch sichereres, nämlich vierrädriges Fahrzeug entsteht.

Wie die Zeichnungen zeigen, kann der erfindungsgemäße Tretroller mit einem abnehmbaren Transportgutbehälter 17 bestückt werden, welcher sich auf dem Rahmen 1 und/oder an dem Träger 6 abstützt und vorteilhafterweise zwischen den Radachsen 4 und 16 liegt, wodurch sich eine gute Gewichtsverteilung ergibt. Diese Anordnung ist so stabil, dass größere und schwerere Gegenstände, ja sogar Kleinkinder, gefahrlos, schnell und sicherer als mit einem Fahrrad oder einem herkömmlichen zweirädrigen Tretroller transportiert werden können.

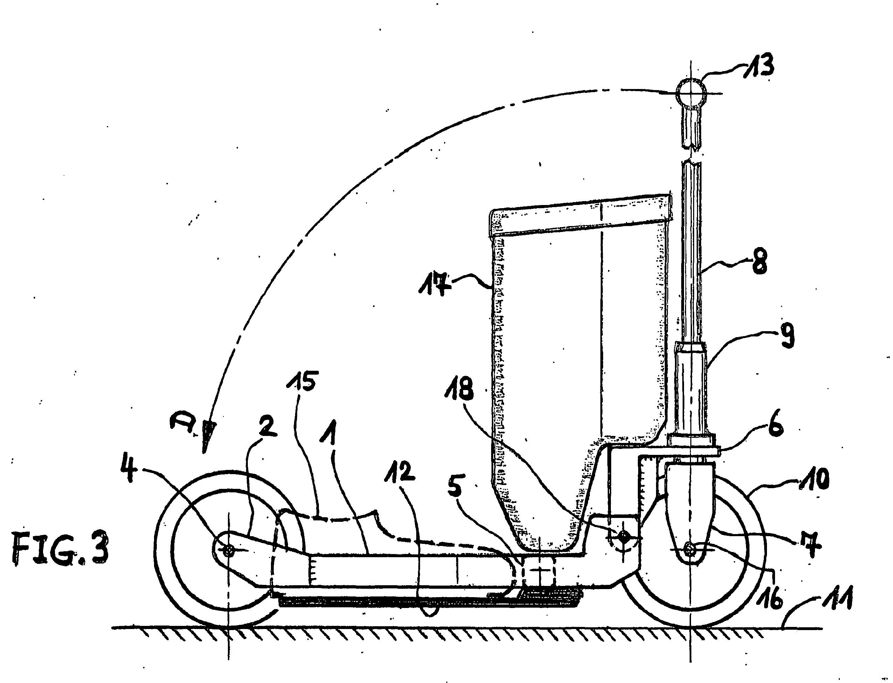

Bei dem in Figur 3 veranschaulichten Ausführungsbeispiel ist der die Lenkstange 8 aufnehmende Träger 6 mittels der Drehachse 18 am Rahmen verschwenkbar gelagert. Nach Abnehmen des Transportgutbehälters 17 kann so zu Transport- und Lagerzwecken der Lenker 8 mit Vorderrad 10 in Richtung D um etwa 90° nach hinten umgeklappt werden. Sowohl in Gebrauchs- als auch in Lagerposition ist der Träger 6 in nicht dargestellter Weise verriegelbar.

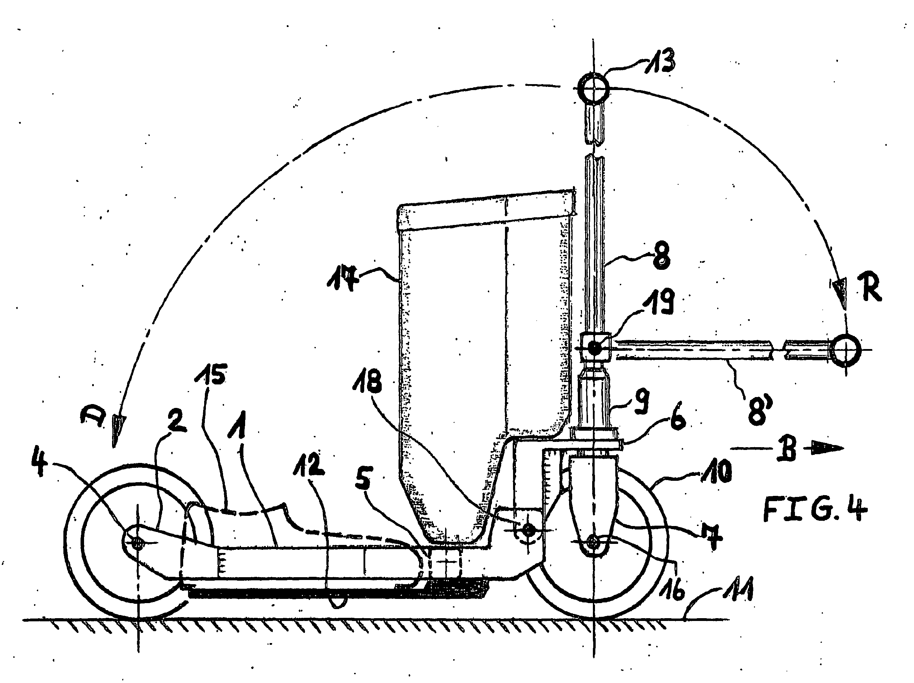

Bei dem in Figur 4 dargestellten Ausführungsbeispiel ist die Lenkstange 8' um eine oberhalb des Lagers 9 vorgesehene Drehachse 19 noch vorn in Richtung des Pfeiles R umklappbar. Die Lenkstange 8' ist dann etwa parallel zur Fahrbahn 11 gelegen und bildet in dieser Position eine Zugdeichsel, mit welcher der Tretroller in sehr bequemer Weise gezogen werden kann. Mit ihm können in diesem Fall auf dem Rahmen platzierte Transportgüter, z. B. breite und schwere Kisten, transportiert werden. Auch kann der Tretroller als zu ziehender Kinderwagen benutzt werden, wobei das Kind in den Transportgutbehälter 17 gestellt oder gelegt wird. In stehender Position kann sich das Kind am oberen Rand des auf der Plattform 12 aufgestellten Transportgutbehälters 17 festhalten.

### Bezugszeichenliste

- 1: Rahmen
- 1a, 1b: Rahmenarme
- 1c: Joch
- 2: Radgabel
- 3: Laufrad
- 4: Hinterradachse
- 5: Stabilisierungsstrebe
- 6: Träger
- 7: Radgabel
- 8, 8': Lenkstange
- 9: Lager

- 10: vorderes Lenkrad
- 11: Fahrbahn
- 12: Trittbrett
- 13: Lenker
- 14, 14': Stoßfuß
- 15: Standfuß
- 16: Vorderradachse
- 17: Transportgutbehälter
- 18: Drehachse
- 19: Drehachse

- F, F': Freiraum
- B: Fahrtrichtung für Vorwärtsfahrt
- D: Klapprichtung für nach hinten umklappbare Lenkstange
- R: Klapprichtung für nach vorn umklappbare Lenkstange

## Patentansprüche

1. Tretroller mit einem ein bodennahes Trittbrett (12) tragenden Rahmen (1), an dessen in Fahrtrichtung vorderen Ende eine Lenkstange (8) mit wenigstens einem Lenkrad (10) gelagert ist und welche zwei sich in Fahrtrichtung und parallel zueinander erstreckende Arme (1a, 1b) aufweist, an deren hinteren Enden jeweils ein Laufrad (3) drehbar gelagert ist,
**dadurch gekennzeichnet, dass** zwischen den Armen (1a, 1b) des Rahmens (1) mit Abstand mittig das Trittbrett (12) vorgesehen ist, auf welches der Standfuß (15) des Fahrers aufzusetzen ist, und dass der Abstand jeweils zwischen einem Arm (1a, 1b) und dem seitlichen Rand des Trittbretts (12) mindestens der Breite des Stossfusses (14, 14') des Fahrers entspricht.

2. Tretroller nach Anspruch 1,
**dadurch gekennzeichnet, dass** der Rahmen (1) an seinem vorderen Ende ein zylindrisches Lager (9) für die Lenkstange (8), die Rahmenarme (1a, 1b) an ihren hinteren Enden Radgabeln (2) für die hinteren Laufräder (3) und die Lenkstange (8) eine Radgabel (7) für das Lenkrad (10) aufweisen.

3. Tretroller nach Anspruch 1 oder 2,
**dadurch gekennzeichnet, dass** die Rahmenarme (1a, 1b) an ihren vorderen Enden über ein Joch (1c) verbunden sind, dass parallel zu diesem verlaufend eine Stabilisierungstrebe (5) vorgesehen ist und dass das Trittbrett (12) mit seinem vorderen Ende an Joch (1c) und Stabilisierungsstrebe (5) angebracht ist.

4. Tretroller nach Anspruch 3,
**dadurch gekennzeichnet, dass** das Trittbrett (12) aus elastisch federndem Material, vorzugsweise Stahl oder Kunststoff, besteht.

5. Tretroller nach einem der Ansprüche 1 bis 4,
**dadurch gekennzeichnet, dass** sich das Trittbrett (12) nach hinten verjüngt.

6. Tretroller nach einem der Ansprüche 1 bis 5,
**dadurch gekennzeichnet, dass** das Trittbrett seitlich verschiebbar und/oder höhenverstellbar ist.

7. Tretroller nach einem der Ansprüche 1 bis 6,
**dadurch gekennzeichnet, dass** an der Lenkstange zwei gleichachsige, in geringem Abstand voneinander angeordnete Lenkräder vorgesehen sind.

8. Tretroller nach einem der Ansprüche 1 bis 7, **gekennzeichnet durch** einen Transportgutbehälter (17), der am Rahmen (1) und/oder an einem die Lenkstange (8) mit dem Rahmen (1) verbindenden Träger (6) abnehmbar befestigt ist.

9. Tretroller nach einem der Ansprüche 1 bis 8,
**dadurch gekennzeichnet, dass** die Lenkstange (8, 8') um eine quer zur Mittelachse des Trittbrettes (12) verlaufende Drehachse (18, 19) zu Transportzwecken nach hinten und/oder vorn umklappbar und sowohl in Fahr- als auch in Transportposition erforderlichenfalls verriegelbar ist.

## Claims

1. A kick scooter with a frame (1) which supports a footboard (12) close to the ground and at the front end of which in the direction of travel a steering bar (8) with at least one steering wheel (10) is mounted and which has two arms (1a, 1b) which extend in the direction of travel and parallel to each other and at the rear ends of which in each case one running wheel (3) is mounted in a rotatable manner, **characterized in that** the footboard (12), on which the standing foot (15) of the rider is to be placed, is provided between the arms (1a, 1b) of the frame (1) at a distance in the middle, and the distance between an arm (1a, 1b) and the lateral edge of the footboard (12) corresponds in each case at least to the width of the kicking foot (14, 14') of the rider.

2. A kick scooter according to claim 1, **characterized in that** the front end of the frame (1) has a cylindrical bearing (9) for the steering bar (8), the rear ends of the frame arms (1a, 1b) have wheel forks (2) for the rear running wheels (3) and the steering bar (8) has a wheel fork (7) for the steering wheel (10).

3. A kick scooter according to claim 1 or 2, **characterized in that** the front ends of the frame arms (1a, 1b) are connected by way of a yoke (1c), a stabilizing brace (5) is provided extending parallel to this yoke (1c), and the front end of the footboard (12) is attached to the yoke (1c) and the stabilizing brace (5).

4. A kick scooter according to claim 3, **characterized in that** the footboard (12) consists of elastically resilient material, preferably steel or plastics material.

5. A kick scooter according to any one of claims 1 to 4, **characterized in that** the footboard (12) tapers towards the rear.

6. A kick scooter according to any one of claims 1 to 5, **characterized in that** the footboard is laterally displaceable and/or vertically displaceable.

7. A kick scooter according to any one of claims 1 to 6, **characterized in that** two coaxial steering wheels arranged at a slight distance from each other are provided on the steering bar.

8. A kick scooter according to any one of claims 1 to 7, **characterized by** a container (17) for conveying goods which is fastened in a detachable manner to the frame (1) and/or to a support (6) connecting the steering bar (8) to the frame (1).

9. A kick scooter according to any one of claims 1 to 8, **characterized in that** the steering bar (8, 8') is capable of being folded down towards the rear and/or the front about an axis of rotation (18, 19) extending transversely to the centre axis of the footboard (12) for transportation purposes and is capable of being locked both in the travelling and in the transportation position.

## Revendications

1. Trottinette comportant un cadre (1) portant un marchepied (12) proche du sol et dont l'extrémité avant selon le sens de roulage, comporte un guidon (8) avec au moins une roue directrice (10) et deux branches (1a, 1b) parallèles dans la direction de déplacement et dont l'extrémité arrière porte à rotation une roue de roulement (3),
trottinette **caractérisée en ce qu'**
le marchepied (12) est prévu au milieu à distance entre les branches (1a, 1b) du cadre (1), marchepied recevant le pied fixe (15) de l'utilisateur, et
- la distance entre chaque fois une branche (1a, 1b) et le bord latéral du marchepied (12), correspond au moins à la largeur du pied poussant (14, 14') de l'utilisateur.

2. Trottinette selon la revendication 1,
**caractérisée en ce qu'**
à son extrémité avant le cadre (1) comporte un palier cylindrique (9) pour le guidon (8), les branches (1a, 1b) du cadre comportent à leur extrémité arrière des fourches de roue (2) pour les roues de roulement (3), arrière et le guidon (8) comporte une fourche (7) pour la roue directrice (10).

3. Trottinette selon la revendication 1 ou 2,
**caractérisée en ce que**
les branches (1a, 1b) du cadre sont reliées à leur extrémité avant par un arceau (1c) et une entretoise de stabilisation (5), et
le marchepied (12) est installé par son extrémité avant sur l'arceau (1c) et sur l'entretoise de stabilisation (5).

4. Trottinette selon la revendication 3,
**caractérisée en ce que**
le marchepied (12) est réalisé en un matériau à ressort, élastique, de préférence en acier ou en matière plastique.

5. Trottinette selon l'une des revendications 1 à 4,
**caractérisée en ce que**
le marchepied (12) va en diminuant vers l'arrière.

6. Trottinette selon l'une des revendications 1 à 5,
**caractérisée en ce que**
le marchepied est coulissant latéralement et/ ou réglable en hauteur.

7. Trottinette selon l'une des revendications 1 à 6,
**caractérisée en ce que**
le guidon comporte deux roues directrices coaxiales, à faible distance l'une de l'autre.

8. Trottinette selon l'une des revendications 1 à 7,
**caractérisée par**
un réceptacle de transport de marchandises (17) fîxé au cadre (1) et/ou à un support de liaison (6) reliant la direction (8) au cadre (1), la fixation étant amovible.

9. Trottinette selon l'une des revendications 1 à 8,
**caractérisée en ce que**
le volant (8, 8') peut être rabattu vers l'arrière et/ou l'avant autour d'un axe de rotation (18, 19) transversal à l'axe médian du marchepied (12) pour faciliter le transport et le volant peut être également verrouillé en position d'utilisation et en position de transport.
